# EUROPEAN PATENT SPECIFICATION

(11) **EP 2 949 564 B1**
(45) Date of publication and mention of the grant of the patent: **28.03.2018**
(21) Application number: 15162646.2
(22) Date of filing: 07.04.2015
(51) Int. Cl.: B62K 19/46, B62K 11/10, B60K 13/02, F02M 35/16

(54) **VEHICLE**
FAHRZEUG
VÉHICULE

(30) Priority: 30.05.2014 JP 2014112722; 30.01.2015 JP 2015016625
(43) Date of publication of application: 02.12.2015
(73) Proprietor: Yamaha Hatsudoki Kabushiki Kaisha, Iwata-shi, Shizuoka-ken 438 (JP)
(72) Inventor: Tsukanaka, Hideyoshi, Shizuoka-ken (JP); Takahashi, Masayasu, Shizuoka-ken, 438-8501 (JP)
(74) Representative: Moreland, David

(56) References cited:
- EP-A1- 2 287 459
- EP-A1- 2 546 129
- EP-A1- 2 610 155
- WO-A1-2004/078573
- US-A1- 2006 124 379

## Description

### FIELD OF INVENTION

The present invention relates to a vehicle, such as a straddle-type vehicle or saddle-ride type vehicle.

### BACKGROUND TO INVENTION

A vehicle comprising a power unit that is supported upon a body frame so as to be capable of pivoting together with a rear wheel is known. For example, in the vehicle described in Japanese Laid-Open Patent Publication 2011-051484, the power unit is disposed under the seat. This power unit comprises an engine, a transmission, an air cleaner box, and an intake passage. The intake passage connects between the air cleaner box and the engine.

With the vehicle described above, an element such as a storage box or a fuel tank or the like is disposed under the seat, and this storage unit must be arranged so as to avoid interference with the pivoting range of the power unit. Due to this, there is a limitation upon increase of the volume of the power unit.

Moreover, with the vehicle of Japanese Laid-Open Patent Publication 2011-051484, the air cleaner box is arranged so as to straddle the center line of the vehicle in a plan view. If, hypothetically, the air cleaner box were to be arranged on the left or on the right of the vehicle center line without straddling the vehicle center line, then there may be a possibility that the dimension of the vehicle in its width direction would be increased, due to one side portion of the air cleaner box projecting towards the side of the vehicle. If, in addition to the air cleaner box being arranged on the left or on the right of the vehicle center line, some other member, for example an air cleaner cover, were also to be provided further towards the same side, then again there would be a possibility that the dimension of the vehicle in its transverse direction would be increased. By contrast, if the air cleaner box is arranged so as to straddle the center line of the vehicle in the plan view, then there is the advantageous aspect that it is easy to keep the dimension of the vehicle in its transverse direction compact. However, the downside of this is that the volume of the storage unit becomes small.

US 2006/124,379 A1, which is considered as the closest prior art, describes a straddle-type vehicle that comprises a power train, a vehicle body cover that extends over a portion of the power train, a moveable seat that is capable of rotating about a generally horizontal axis, and an air cleaner box located within the vehicle body cover. The air box comprises a first (lower) portion, a second (upper) portion and an air filter. The power train comprises an internal combustion engine having a crankcase. The power train and the crankcase constitute an engine unit that can swing about a pivot point and is supported by the vehicle body frame. The air cleaner is at least partially attached to the engine unit and is capable of swinging together with the engine unit. The air cleaner is configured to extend in the transverse direction of the vehicle and straddle the central portion of the vehicle. The air cleaner is comprised of a lower unit constituting a lower portion of the air cleaner and an upper unit constituting an upper portion of the air cleaner, wherein the upper unit is capable of being attached to and removed from the lower end, such that the air cleaner can be divided in the vertical direction. A dirty side duct is provided for suctioning air from outside the vehicle into a dirty side portion of the air cleaner, whilst a clean side duct supplies air that has had the impurities removed from it via the filter from the air cleaner into the engine, and extends from a clean side portion of the air filter.

It is an object of at least one embodiment of at least one aspect of the present invention to obviate or at least mitigate one or more problems or disadvantages in the prior art.

An object of at least one embodiment of the present invention is to ensure that the volume of a storage unit can be large in a vehicle in which an air cleaner box is disposed so as to straddle the vehicle center line.

### SUMMARY OF INVENTION

Various aspects of the present invention are defined in the independent claims. Some preferred features are defined in the dependent claims.

A vehicle according to one aspect of the present invention comprises: a body frame, a seat and a power unit. The vehicle may comprise a storage unit, such as a storage box or fuel tank. The seat may be supported upon the body frame. The power unit may be disposed under or below the seat, and may be pivotably supported upon the body frame. The storage unit may be disposed under or below the seat. The power unit may include an engine, which may include a cylinder head, an intake passage, a throttle body, a duct, and an air cleaner box. The intake passage may be connected to the cylinder head. The throttle body may be connected to the intake passage. The duct and/or air cleaner box may be made from resin. The duct may be connected to the throttle body. The air cleaner box may be connected to the duct. The intake passage may have a shape extending upward from the cylinder head and may then curve toward the rear. The air cleaner box may include a first air cleaner box portion and a second air cleaner box portion, which may be separate left and right members. The first air cleaner box portion and the second air cleaner box portion may be joined together. The duct may include an internal duct disposed within the air cleaner box. The air cleaner box may be arranged so as to overlap the vehicle center line, which may extend in the front and back direction of the vehicle, as seen in a plan view. At least a portion of the internal duct may have a shape, such as a sideways elongated or elliptical shape, in which its dimension in a vertical or up and down direction is shorter than its dimension in a transverse, sideways or left and right direction when viewed in a cross section orthogonal to the axial line of the duct.

In investigations for increasing the volume of the storage unit, the inventors of the present application have thought deeply about the shape of the air cleaner box. With an air cleaner box that straddles the center line of the vehicle the present inventors have striven to increase the volume of the storage unit while still keeping the volume of the air cleaner box the same by reducing the dimension of the air cleaner box in the up and down direction while increasing its dimensions in the transverse, sideways or left and right direction and in the front and back direction. However, it may be difficult to make the volume of the storage unit sufficiently large, since there is a limit to which the dimension in the up and down direction of the air cleaner box can be reduced.

Accordingly, the present inventors have investigated the reasons why it is not possible to reduce the dimension in the up and down direction of the air cleaner box. As a result of this investigation, it has been identified that the position of a duct that connects between the air cleaner box and the throttle body may exert a great influence upon the dimension in the up and down direction of the air cleaner box.

That is to say, the position of the front end of the duct may be determined by the position of the throttle body to which the duct is connected. The position of the throttle body may be determined by the position of an intake passage which rises from the cylinder head of the engine and curves toward the rear. From the standpoint of increasing the volume of the other component such as the storage unit or fuel tank, it may be desirable to minimize the separation in an upward direction between the position of the intake passage and the engine. However, due to the demands of intake efficiency and manufacturing convenience, it may be desirable to arrange the intake passage so as to be positioned above and somewhat separated from the upper side of the engine. Due to this, the throttle body and also the duct may be arranged at a position above and somewhat separated from the upper side of the engine.

Here, the position of the upper edge of the air cleaner box may experience a limitation due to the position of the upper edge of the duct, since the air cleaner is connected to the duct. Accordingly, there may be a limitation on lowering the position of the upper edge of the air cleaner box.

Furthermore, the air cleaner box may typically be made by flowing a molten resin material into a mold. In this case, from the standpoint of enhancing the ease of maintenance of the air cleaner box and so on, it may be desirable for the direction of removal of the mold to be set to be the left and right direction, in the state in which the air cleaner box is mounted to the vehicle. Due to this, it may be difficult to form only a portion of the upper surface of the air cleaner box that is to be positioned above the duct as having a shape in which it is projected upward. Accordingly, it may not be desirable for only the portion to which the duct is connected to be projected upward, while the position of the upper edge of the other portion is kept low.

Thus, the present inventors have come up with the idea of making at least a portion of the internal duct within the air cleaner box in a shape that is elongated sideways, so that its dimension in the vertical or up and down direction that may be smaller than its dimension in the transverse, sideways or left and right direction. Due to this, the position of the upper edge of the duct may be lowered. Accordingly, it may be possible to lower the position of the upper edge of the air cleaner box over a broad region in the transverse, sideways or left and right direction. Due to this, it may be possible to reduce the dimension of the air cleaner box in the up and down direction, even though the air cleaner box is arranged to straddle the center line of the vehicle. Accordingly, it may be possible to increase the volume of the storage unit, while still ensuring an appropriate volume for the air cleaner box.

As seen in a cross section orthogonal to the axial line of the duct, the sideways elongated shape may be an elliptical shape whose dimension in the vertical or up and down direction is shorter than its dimension in the transverse, sideways or left and right direction. In this case it may be possible to enhance the rigidity of the duct, as compared to the case in which the duct is formed in a shape having a rectangular cross section.

The internal duct may include an air cleaner connection portion that may be connected to the air cleaner box. The air cleaner connection portion may have the sideways elongated shape. In this case, it may be possible to reduce the dimension in the up and down direction of the portion of the air cleaner box to which the duct is connected.

The duct may include an external duct that is disposed externally to the air cleaner box. This external duct may include a throttle body connection portion that is connected to the throttle body. The throttle body connection portion may have a circular shape or a shape having a circularity higher than, or which is closer to circular than, the sideways elongated shape when viewed in a cross section orthogonal to the axial line of the duct. In this case, only the duct may be formed in a shape that is elongated sideways, without changing the shape of the throttle body. Due to this, the manufacture of this vehicle may be simple and easy.

From the air cleaner connection portion toward the throttle body connection portion, the shape of the duct may gradually change from the sideways elongated shape toward circular when viewed in a cross section orthogonal to the axial line of the duct. In this case, it may possible to minimize the influence upon the air flow within the duct.

The dimension in the transverse, sideways or left and right direction of the flow conduit defined within the air cleaner connection portion may be greater than the diameter of the flow conduit defined within the throttle body connection portion when viewed in a cross section orthogonal to the axial line of the duct. In this case, it may be possible to reduce change of the flow conduit cross sectional area of the duct between the air cleaner connection portion and the throttle body connection portion.

The air cleaner box may include a frontward facing surface portion to which the duct is connected. The dimension in the up and down direction of the frontward facing surface portion may be smaller than the diameter of the throttle body connection portion. In this case, it may be possible further to reduce the dimension in the up and down direction of the air cleaner box.

The air cleaner box may have a shape whose dimension in the up and down direction becomes smaller towards the front. The frontward facing surface portion may be positioned rearward of the front end portion of the air cleaner box. In this case, it may be possible to increase the space available for connection of the duct, as compared to a case in which the duct is connected to the front end portion of the air cleaner box.

The portion of the internal duct that overlaps the storage unit may have a sideways elongated shape when viewed in a plan view. In this case, it may be possible to increase the dimension in the up and down direction of the storage unit.

There may be further included a body cover that may cover over at least a portion of the air cleaner box from the side. In this case, bulging outward of the shape of the air cleaner to the side may be limited by the vehicle cover. The present invention may be particularly appropriately applied to this type of vehicle.

There may be further included a rear suspension that may be disposed rearward of the rear end portion of the air cleaner box. In this case, bulging outward of the shape of the air cleaner toward the rear may be limited by the rear suspension. The present invention is particularly appropriately applied to this type of vehicle.

According to the present invention, which is defined by claim 1, in a vehicle in which an air cleaner box is disposed so as to straddle the vehicle center line, it may be possible to ensure that the volume of a storage unit can be large.

An assembly according to a not claimed second aspect comprises a duct for a vehicle. The assembly may comprise an air cleaner box for the vehicle.

The vehicle may comprise a body frame, a seat and a power unit. The vehicle may comprise a storage unit, such as a storage box or fuel tank. The seat may be supported upon the body frame. The power unit may be disposed under or below the seat, and may be pivotably supported upon the body frame. The other component, e.g. the storage unit or fuel tank, may be disposed under or below the seat. The power unit may include an engine, which may include a cylinder head, an intake passage and a throttle body. The intake passage may be connected to the cylinder head. The throttle body may be connected to the intake passage. The intake passage may extend upward from the cylinder head and may then be curved toward the rear of the vehicle.

The duct and/or air cleaner box may be made from resin. The duct may be connected or connectable to the throttle body. The air cleaner box may be connected or connectable to the duct. The air cleaner box may include a first air cleaner box portion and a second air cleaner box portion, which may be separate left and right members. The first air cleaner box portion and the second air cleaner box portion may be joined together. The duct may include an internal duct disposed within the air cleaner box. The air cleaner box may be arranged or arrangable so as to overlap the vehicle center line, in use. The vehicle center line may extend in the front and back direction of the vehicle, as seen in a plan view. At least a portion of the internal duct may have a shape, such as a transverse or sideways elongated shape, in which its dimension in a vertical or up and down direction is less or shorter than its dimension in a transverse, sideways or left and right direction when viewed in a cross section orthogonal to the axial line of the duct.

According to a not claimed third aspect is a method of assembling the assembly of the second aspect or fitting or retro-fitting the assembly to a vehicle. The method may comprise connecting the duct to a throttle body of the vehicle. The method may comprise connecting the air cleaner box to the duct. The method may comprise arranging the air cleaner box so as to overlap the vehicle center line, wherein the vehicle center line extends in the front and back direction of the vehicle, as seen in a plan view.

It will be appreciated that features analogous to those described individually or in combination above or below in relation to any of the above aspects or below embodiments may be individually and separably or in combination applicable to any of the other aspects or embodiments.

Apparatus features analogous to, or configured to implement, those described above in relation to a method and method features analogous to the use, installation, assembly, repair and manufacture of those described above in relation to an apparatus are also intended to fall within the scope of the present invention.

### BRIEF DESCRIPTION OF DRAWINGS

An embodiment of the present invention will now be described, by way of example only, with reference to the accompanying drawings, which are:
- **Figure 1**: a side view of a vehicle according to an embodiment of the present invention;
- **Figure 2**: a side view showing an internal construction of this vehicle;
- **Figure 3**: a plan view showing a rear portion of the vehicle;
- **Figure 4**: a side view of a power unit;
- **Figure 5**: a perspective view of an air cleaner box;
- **Figure 6**: a left side view of the air cleaner box;
- **Figure 7**: a plan view of the air cleaner box;
- **Figure 8**: a front view of the air cleaner box;
- **Figure 9**: a rear view of the air cleaner box;
- **Figure 10**: a right side view of the air cleaner box;
- **Figure 11**: a sectional view taken in a plane shown by arrows X-X in Figure 7;
- **Figure 12**: a plan view of a duct;
- **Figure 13**: a set of sectional views of this duct taken in planes orthogonal to its axial line;
- **Figure 14**: a set of sectional views of a duct according to a variant embodiment; and
- **Figure 15**: a figure showing an air cleaner box according to a comparison example.

### DETAILED DESCRIPTION OF DRAWINGS

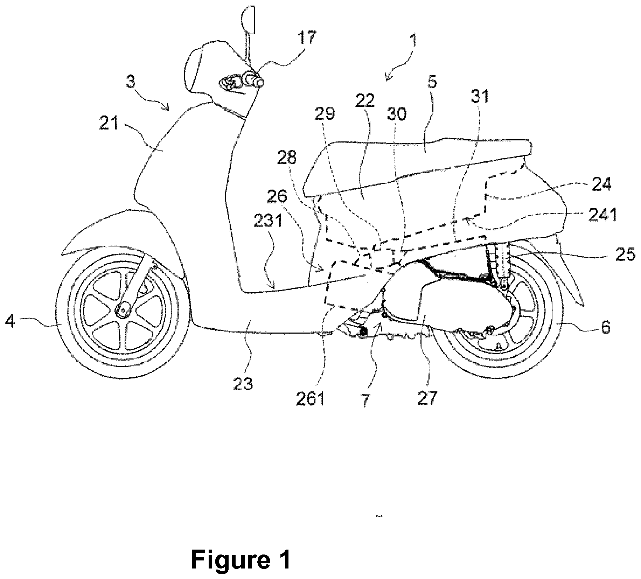

In the following, a vehicle 1 according to an embodiment of the present invention will be explained with reference to the drawings. Figure 1 is a side view of this vehicle 1.

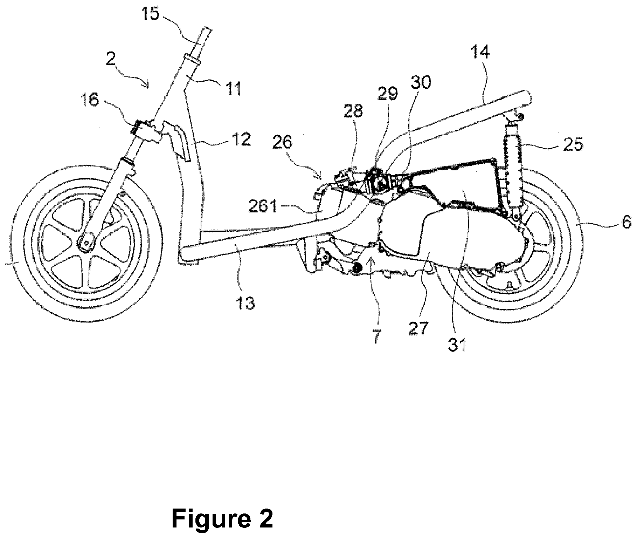

Figure 2 is a side view showing the internal structure of the vehicle 1. This vehicle 1 is a scooter type motorcycle, by way of example. As shown in Figure 2, the vehicle 1 comprises a body frame 2, a front wheel 4, a rear wheel 6, and a power unit 7.

It should be understood that, in this specification, the front and back direction of the vehicle 1, the up and down direction of the vehicle 1, and the left and right direction of the vehicle 1 respectively mean its front and back direction, its up and down direction, and its left and right direction as seen from the point of view of a person who is driving the vehicle 1. Moreover, it will be supposed that the front and back direction does not only mean a direction that is parallel to the front and back direction of the vehicle 1, but also includes any direction that is angled to the front and back direction of the vehicle 1 within the range of ±45°. To put this in another manner, a direction that is closer to the front and back direction of the vehicle 1 than to its left and right direction or to its up and down direction is also considered as being included within the definition of "front and back direction".

In a similar manner, it will be supposed that the up and down direction includes any direction that is angled to the up and down direction of the vehicle 1 within the range of ±45°. To put this in another manner, a direction that is closer to the up and down direction of the vehicle 1 than to its front and back direction or to its left and right direction is also considered as being included within the definition of "up and down direction".

Yet further, it will be supposed that the left and right direction includes any direction that is angled to the left and right direction of the vehicle 1 within the range of ±45°. To put this in another manner, a direction that is closer to the left and right direction of the vehicle 1 than to its front and back direction or to its up and down direction is also considered as being included within the definition of "left and right direction".

The body frame 2 comprises a head pipe 11, a down frame 12, a lower frame 13, and a rear frame 14. A steering shaft 15 is fitted in the head pipe 11 so as to be rotatable in left and right directions. The lower portion of this steering shaft 15 is connected to a front fork 16. The front fork 16 rotatably supports a front wheel 4. The upper portion of the steering shaft 15 is connected to handlebars 17 shown in Figure 1.

The down frame 12 extends downward from the head pipe 11. The lower frame 13 is connected to the lower portion of the down frame 12. The lower frame 13 extends toward the rear from the down frame 12. The rear frame 14 is connected to the lower frame 13. Moreover, the rear frame 14 extends upward and slantingly toward the rear from the rear portion of the down frame 12.

As shown in Figure 1, the vehicle 1 comprises a body cover 3 and a seat 5. The body cover 3 comprises a front cover 21, a rear cover 22, and a lower cover 23. The front cover 21 covers the surroundings of the head pipe 11 and the down frame 12. The rear cover 22 covers the surroundings of the rear frame 14. The seat 5 is disposed over the rear cover 22. The seat 5 is supported upon the body frame 2. In more detail, the seat 5 is supported upon the rear frame 14 via a stay not shown in the figures. A storage unit 24 is disposed beneath or under the seat 5. This storage unit 24, for example, provides a volume that is capable of containing a helmet.

The lower cover 23 is disposed between the front cover 21 and the rear cover 22. This lower cover 23 covers the surroundings of the lower frame 13. The upper surface of the lower cover 23 includes a flat foot board 231. At least part of this flat foot board 231 is disposed in front of and lower than and/or under the seat 5.

The power unit 7 is disposed beneath or under the seat 5. This power unit 7 is supported upon the body frame 2 so as to be pivotable. The power unit 7 rotatably supports the rear wheel 6. The rear wheel 6 is supported by the body frame 2 via a rear suspension 25.

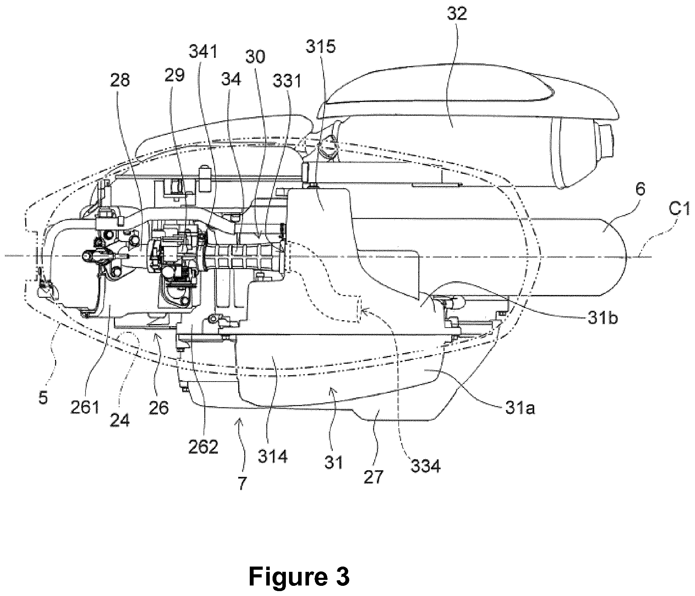

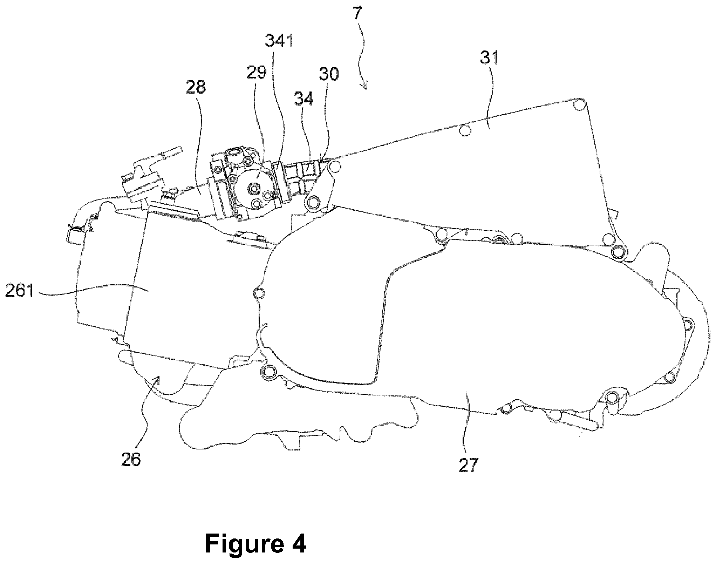

Figure 3 is a plan view showing the rear portion of the vehicle 1. Figure 4 is a side view of a power unit. As shown in Figures 3 and 4, the power unit 7 comprises an engine 26, a transmission 27, an intake passage 28, a throttle body 29, a duct 30, and an air cleaner box 31.

The engine 26 comprises a cylinder head 261 and a crank case 262. The cylinder head 261 is disposed in front of the crank case 262. The cylinder head 261 is connected to the crank case 262. As shown in Figure 3, the transmission 27 is disposed beside the crank case 262. In detail, the transmission 27 is disposed on one side of the crank case 262. A muffler 32 is disposed in the other side of the crank case 262.

The intake passage 28 is connected to the cylinder head 261. This intake passage 28 is connected to the upper surface of the cylinder head 261, and extends toward the rear from the cylinder head 261. In detail, the intake passage 28 has a curved shape that extends upward from the cylinder head 261 and then curves toward the rear.

The throttle body 29 is connected to the intake passage 28. This throttle body 29 is disposed behind the intake passage 28. The throttle body 29 controls the intake amount to a combustion chamber (not shown) that is defined within the cylinder head 261. The duct 30 is connected to the throttle body 29. The duct 30 is disposed behind the throttle body 29. This duct 30 may optionally be made from resin.

The air cleaner box 31 is connected to the duct 30. This air cleaner box 31 is disposed behind the throttle body 29. The air cleaner box 31 is disposed over, directly above or upwardly of the crank case 262 and the transmission 27.

As shown in Figure 1, the body cover 3 covers over a portion of the air cleaner box 31 from the side. In detail, as seen from the side, the rear cover 22 overlaps a portion of the air cleaner box 31. The air cleaner box 31 is disposed under, beneath or downwardly of the storage unit 24. The rear suspension 25 is disposed behind the air cleaner box 31. The rear suspension 25 is disposed rearward of the rear end portion of the air cleaner box 31.

As shown in Figure 3, in a plan view, the air cleaner box 31 overlaps the crank case 262 and the transmission 27. Moreover, in the plan view, the air cleaner box 31 overlaps the storage unit 24. In the plan view, the air cleaner box 31 is arranged so as to overlap the vehicle center line C1 that extends in the front and back direction.

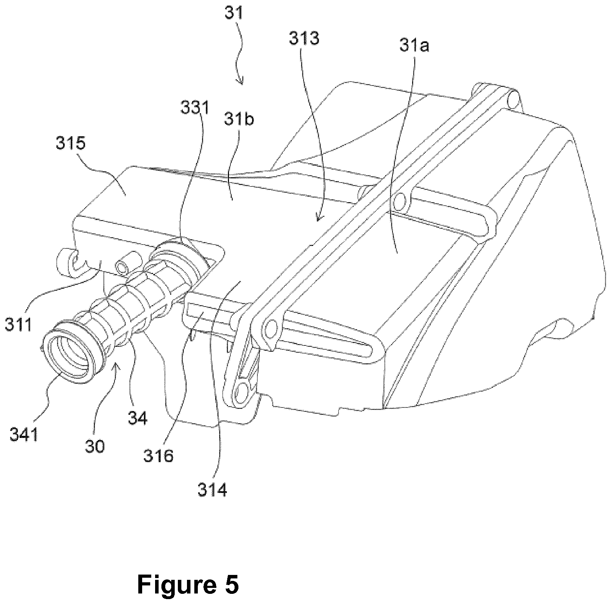

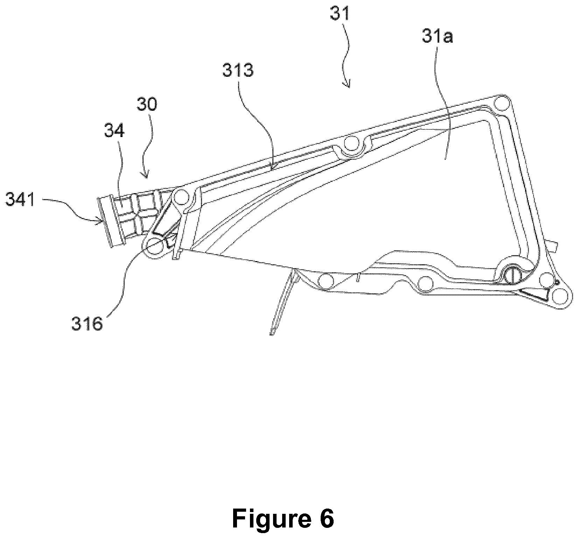

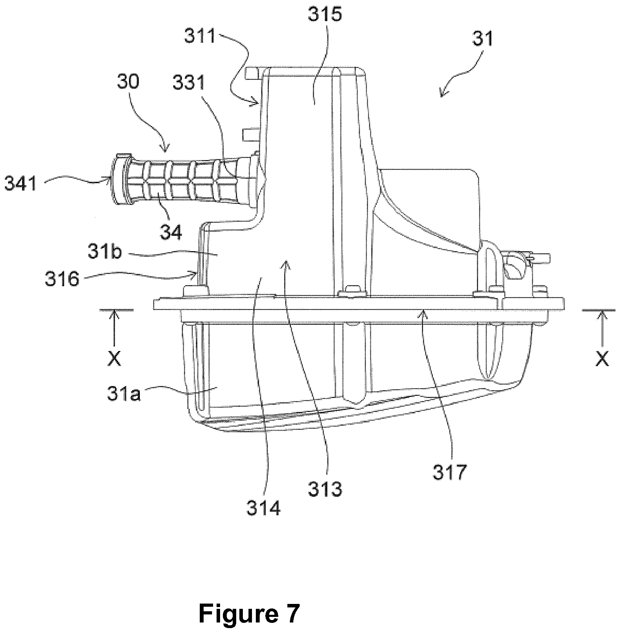

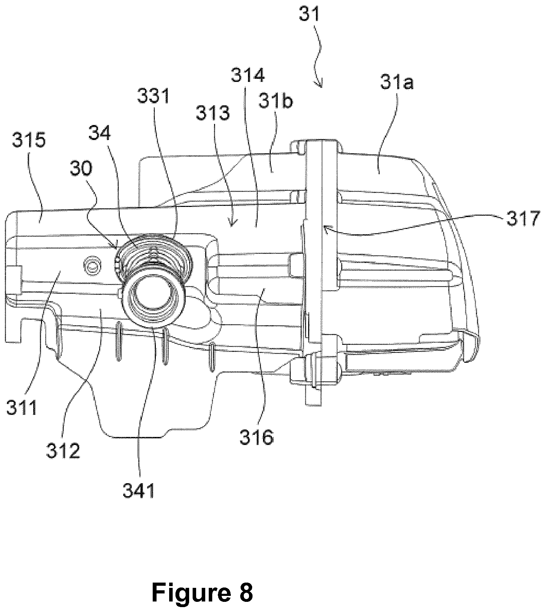

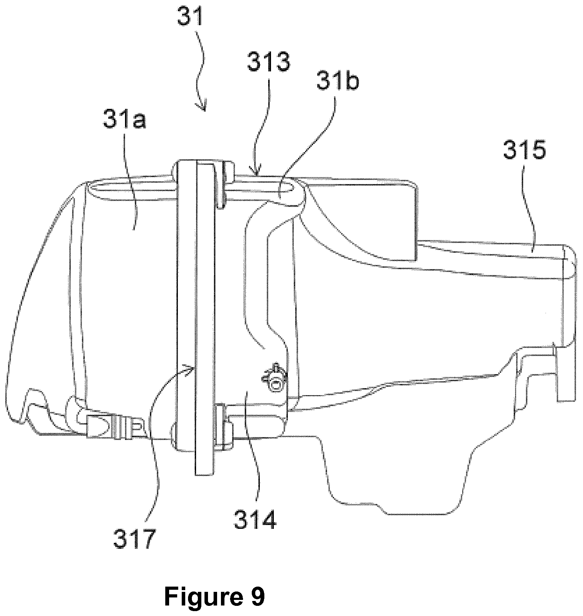

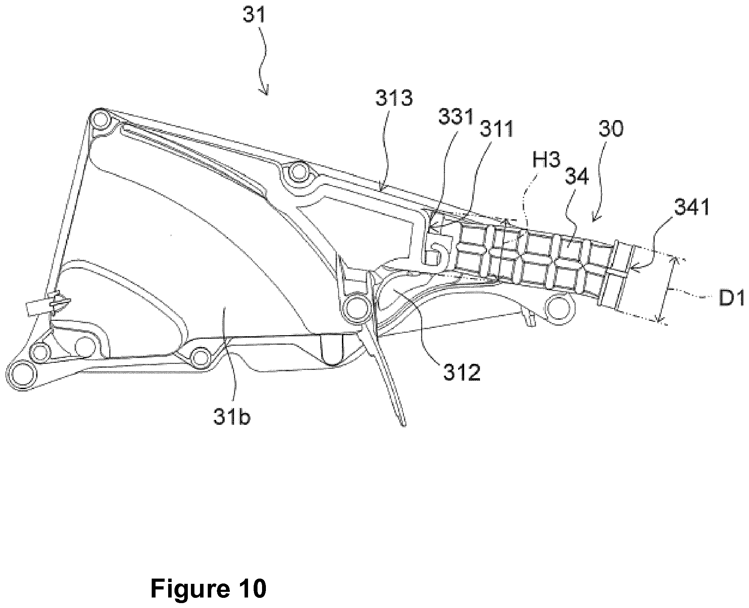

Figure 5 is a perspective view of the air cleaner box 31. Figure 6 is a view of the air cleaner box 31 as seen from the left side of the vehicle. Moreover, Figure 7 is a plan view of the air cleaner box 31. Figure 8 is a front view of the air cleaner box 31. Furthermore, Figure 9 is a rear view of the air cleaner box 31. Figure 10 is a view of the air cleaner box 31 as seen from the right side of the vehicle.

The air cleaner box 31 comprises a first air cleaner box portion 31a and a second air cleaner box portion 31b, these being separate members on the left and the right. The first air cleaner box portion 31a and the second air cleaner box portion 31b are joined together. The first air cleaner box portion 31a is made from resin and is formed as a single member. Similarly, the second air cleaner box portion 31b is made from resin and is formed as a single member.

The air cleaner box 31 has a shape whose dimension in the up and down direction becomes smaller toward the front. The air cleaner box 31 includes a frontward facing surface portion 311 to which the duct 30 is connected. This frontward facing surface portion 311 is positioned rearward of the front end portion 316 of the air cleaner box 31. As shown in Figures 8 and 10, the air cleaner box 31 optionally also includes a frontward facing concave surface portion 312. This frontward facing concave surface portion 312 is positioned under, directly below or beneath the frontward facing surface portion 311. The frontward facing concave surface portion 312 has a shape that is concaved inward, i.e. towards the rear of the vehicle. This frontward facing concave surface portion 312 is provided in order to avoid interference with some other component that is included in the power unit 7. For example, the frontward facing concave surface portion 312 may be provided in order to avoid an electric starter motor (not shown in the drawings) that is attached to the engine 26.

The upper surface 313 of the air cleaner box 31 has a generally flat shape. As seen in a side view, this upper surface 313 of the air cleaner box 31 is tilted so as to slope upward toward the rear. It should be understood that, as shown in Figure 1, the storage unit 24 includes a sloping bottom portion 241. This sloping bottom portion 241 is positioned over the air cleaner box 31. As seen in a side view, in a similar manner to the upper surface 313 of the air cleaner box 31, the sloping bottom portion 241 is tilted so as to slope upward toward the rear.

As shown in Figure 7, the air cleaner box 31 comprises a main body portion 314 and a projecting portion 315. The projecting portion 315 projects sideways from the main body portion 314. This projecting portion 315 includes the frontward facing surface portion 311 described above. The projecting portion 315 is included in the second air cleaner box portion 31b. The main body portion 314 includes the front end portion 316 described above. This main body portion 314 includes a junction surface 317 between the first air cleaner box portion 31a and the second air cleaner box portion 31b. As shown in Figure 3, a portion of the projecting portion 315 is positioned over, directly above or upwardly of the rear wheel 6. A portion of the main body portion 314 is positioned over, directly above or upwardly of the transmission 27.

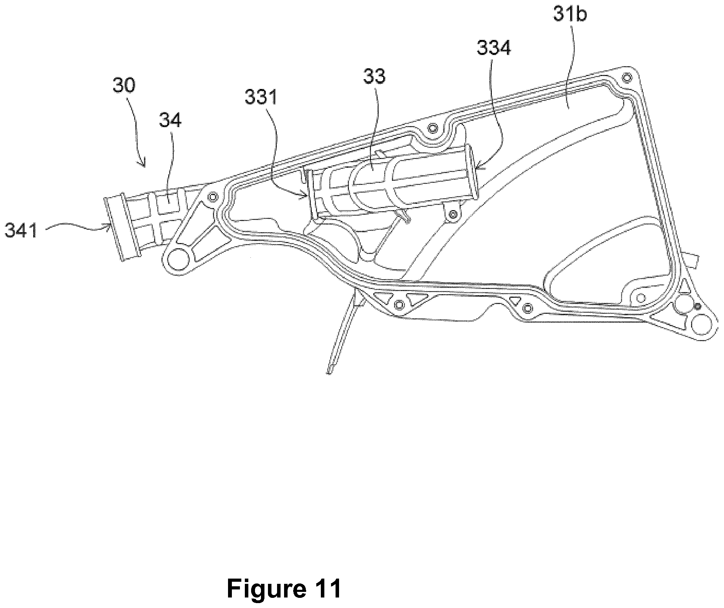

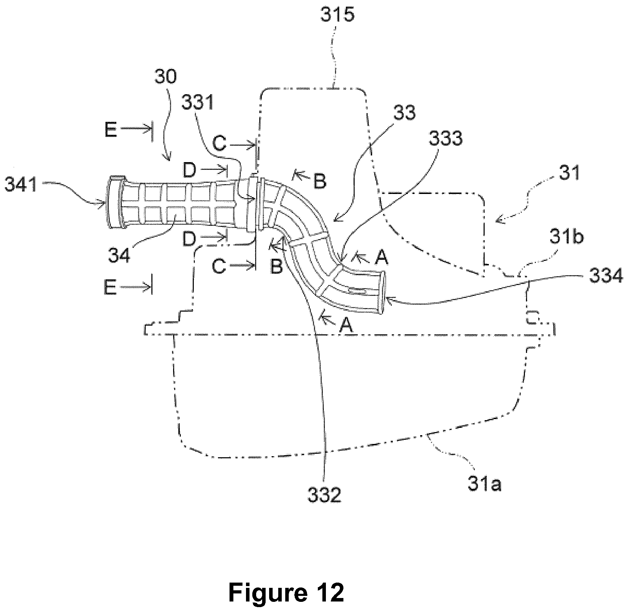

Figure 11 is a sectional view taken in a plane shown by arrows X-X in Figure 7. Figure 12 is a plan view of the duct 30. It should be understood that, in Figure 12, the external shape of the air cleaner box 31 is shown by double dotted broken lines. The duct 30 comprises an internal duct 33 and an external duct 34. The internal duct 33 and the external duct 34 are formed together as a single unitary member.

The internal duct 33 is disposed within the air cleaner box 31. This internal duct 33 comprises an air cleaner connection portion 331. This air cleaner connection portion 331 is connected to the air cleaner box 31. The air cleaner connection portion 331 is connected to the frontward facing surface portion 311. The air cleaner connection portion 331 is positioned at the front end of the internal duct 33.

The external duct 34 is disposed outside the air cleaner box 31. This external duct 34 extends in the front and back direction. The external duct 34 extends outside of the air cleaner box 31 from the air cleaner connection portion 331. The external duct 34 includes a throttle body connection portion 341. This throttle body connection portion 341 is positioned at the front end of the external duct 34. The throttle body connection portion 341 is connected to the throttle body 29.

As shown in Figure 11, as seen from the side, the internal duct 33 extends in the front and back direction in a straight line shape. As shown in Figure 12, the internal duct 33 has a shape that is curved in the left and right or transverse direction. The internal duct 33 comprises a first curved portion 332 and a second curved portion 333. The internal duct 33 curves sideways from the air cleaner connection portion 331 in its first curved portion 332, and then curves toward the rear in its second curved portion 333.

As shown in Figure 3, the internal duct 33 is overlapped by the storage unit 24 in the plan view. Similarly, the external duct 34 is overlapped by the storage unit 24 in the plan view. In this embodiment, the entire duct 30 is overlapped by the storage unit 24 in plan view. However, it would also be acceptable for only a portion of the duct 30 to be overlapped by the storage unit 24 in the plan view.

In the plan view, a portion of the internal duct 33 overlaps the vehicle center line C1, which extends in the front and back direction. In detail, in plan view, the air cleaner connection portion 331 overlaps the vehicle center line C1 which extends in the front and back direction. However, in plan view, the rear end 334 of the internal duct 33 does not overlap the vehicle center line C1 which extends in the front and back direction.

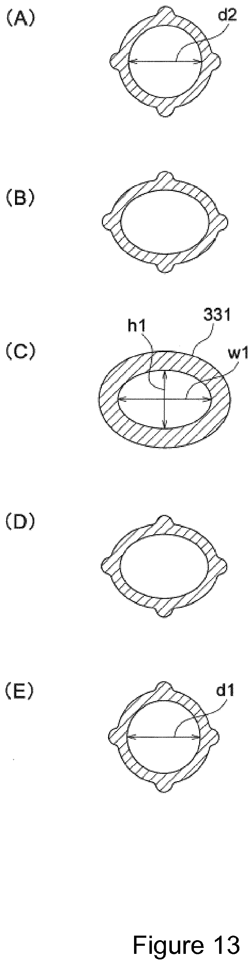

Figure 13 is a set of sectional views taken in planes orthogonal to the axial line of the internal duct 33. Figure 13(A) is a sectional view taken in a plane shown by the arrows A-A in Figure 12. Figure 13(B) is a sectional view taken in a plane shown by the arrows B-B in Figure 12. Figure 13(C) is a sectional view taken in a plane shown by the arrows C-C in Figure 12. Figure 13(D) is a sectional view taken in a plane shown by the arrows D-D in Figure 12. Figure 13(E) is a sectional view taken in a plane shown by the arrows E-E in Figure 12.

As shown in Figure 13, at least a portion of the duct 30 has a sideways elongated shape in which, as seen in a cross section orthogonal to the axial line of the duct 30, its dimension in the up and down direction is short as compared to its dimension in the left and right direction. Moreover, as seen in a cross section orthogonal to the axial line of the duct 30, this sideways elongated shape is an elliptical shape in which the dimension in the up and down direction is short compared to the dimension in the left and right direction.

In detail, from the air cleaner connection portion 331 toward the rear end 334 of the internal duct 33, the shape of the internal duct 33 gradually changes from a sideways elongated shape toward a perfectly circular shape when viewed in a cross section orthogonal to the axial line of the internal duct 33. Moreover, from the air cleaner connection portion 331 toward the rear end 334 of the internal duct 33, the shape of the flow conduit defined within the internal duct 33 also gradually changes from a sideways elongated shape toward a perfectly circular shape.

As shown in Figure 13(C), the air cleaner connection portion 331 has a sideways elongated shape. Moreover, as shown in Figure 13(A), the portion of the internal duct 33 from its A-A cross section to its rear end 334 has a perfectly circular cross sectional shape. As shown in Figure 13(B), the B-B cross section of the internal duct 33 between the air cleaner connection portion 331 and its A-A cross section has an elliptical shape having a circularity that is higher or which is closer to being circular (i.e. is rounder) than the shape of the air cleaner connection portion 331.

Furthermore, from the air cleaner connection portion 331 toward the throttle body connection portion 341 of the external duct 34, the shape of the external duct 34 gradually changes from a sideways elongated shape toward a perfectly circular shape when viewed in a cross section orthogonal through the axial line of the external duct 34. Moreover, from the air cleaner connection portion 331 toward the throttle body connection portion 341 of the external duct 34, the shape of the flow conduit defined within the external duct 34 also gradually changes from a sideways elongated shape toward a perfectly circular shape.

As shown in Figure 13(E), the portion of the external duct 34 from its E-E cross section to its throttle body connection portion 341 has a perfectly circular cross sectional shape. As shown in Figure 13(D), the D-D cross section of the external duct 34 between the air cleaner connection portion 331 and its E-E cross section has an elliptical shape having a circularity that is higher or which is closer to being circular (i.e. is rounder) than the shape of the air cleaner connection portion 331.

In the cross sections shown in Figs. 13(A) through 13(E), the area of the flow conduit defined within the duct 30 is generally the same. Accordingly, as seen in the cross sections orthogonal to the axial line of the duct 30, the length w1 in the left and right direction of the flow conduit defined within the air cleaner connection portion 331 (refer to Figure 13(C)) is greater than the diameter d1 of the flow conduit defined within the throttle body connection portion 341 (refer to Figure 13(E)). Moreover, as seen in the cross sections orthogonal to the axial line of the duct 30, the length h1 in the up and down direction of the flow conduit defined within the air cleaner connection portion 331 (refer to Figure 13(C)) is smaller than the diameter d1 of the flow conduit defined within the throttle body connection portion 341 (refer to Figure 13(E)).

Yet further, in the cross sections orthogonal to the axial line of the duct 30, the length w1 in the left and right direction of the flow conduit defined within the air cleaner connection portion 331 (refer to Figure 13(C)) is greater than the diameter d2 of the flow conduit defined within the rear end 334 of the internal duct 33 (refer to Figure 13(A)). Moreover, as seen in the cross sections orthogonal to the axial line of the duct 30, the length h1 in the up and down direction of the flow conduit defined within the air cleaner connection portion 331 (refer to Figure 13(C)) is smaller than the diameter d2 of the flow conduit defined within the rear end 334 of the internal duct 33 (refer to Figure 13(A)).

Moreover, as shown in Figure 10, the length H3 of the frontward facing surface portion 311 described above in the up and down direction is smaller than the diameter D1 of the throttle body connection portion 341.

As has been explained above, with the vehicle 1 according to this embodiment, a portion of the internal duct 33 has a sideways elongated shape. Due to this, it is possible to lower the position of the upper edge of the duct 30. Due to this, even though the air cleaner box 31 is arranged to straddle the center line C1 of the vehicle, it is still possible to keep the dimension of the air cleaner box 31 in the up and down direction small. Accordingly it is possible to make the volume of the storage unit 24 large, while still ensuring a large volume for the air cleaner box 31.

Moreover, it is possible to make the up and down dimension of the storage unit 24 great, even though it is disposed over the air cleaner box 31. Due to this, it is possible to make the volume of the storage unit 24 large.

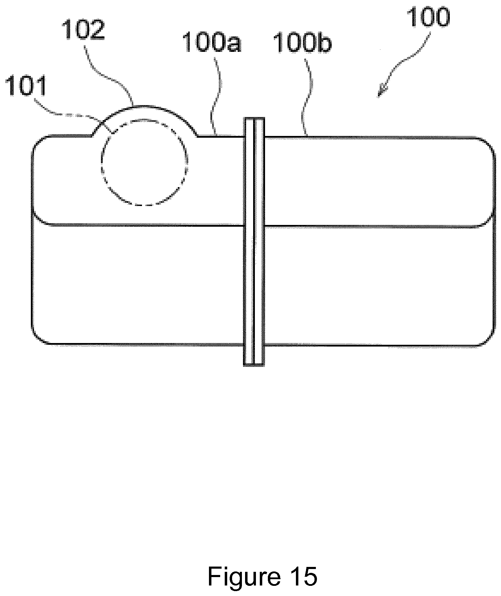

Furthermore, the manufacture of this air cleaner box 31 is simple and easy. For example, Figure 15 is a figure showing an air cleaner box 100 according to a comparison example. This air cleaner box 100 comprises air cleaner box portions 100a and 100b, which are separate members on the left and the right. In the air cleaner box portion 100a, only the portion 102 of the upper surface of the air cleaner box portion 100a that is positioned over a duct 101 has a shape that is projected upward. With this type of shape, during the manufacture of the air cleaner box portion 100a, it is not possible to withdraw it from the mold. Alternatively, it is necessary to make the mold in divided structure, so that the manufacture becomes more difficult. By contrast, with the air cleaner box 31 according to this embodiment, it is possible to lower the position of the top edge of a broad region in the left and right direction. Due to this, the manufacture of this air cleaner box 31 becomes simple and easy.

The air cleaner connection portion 331 has a shape that is elongated sideways. Due to this, it is possible to reduce the dimensions of the frontward facing surface portion 311 of the air cleaner box 31 to which this air cleaner connection portion 331 is connected.

As seen in a cross section orthogonal to the axial line of the duct 30, its sideways elongated shape is an elliptical shape whose dimension in the up and down direction is short as compared to its dimension in the left and right direction. Due to this, as compared to the case of forming this cross sectional shape as a tetragon, it is possible to enhance the rigidity of the duct 30. Moreover, in general, the flow conduit in the throttle body 29 is usually circular. Accordingly, by forming the cross sectional shape of the duct 30 as elliptical, it is possible to reduce the change of shape of the flow conduit between the throttle body 29 and the duct 30. Due to this, it is possible to suppress increase of the air flow resistance of this conduit.

As seen in a cross section orthogonal to the axial line of the duct 30, the throttle body connection portion 341 is formed in the shape of a perfect circle. Due to this, it is possible to form only the duct 30 in a shape that is elongated sideways, without any requirement for changing the shape of the throttle body 29. As a result, the manufacture becomes simple and easy.

As seen in a cross section orthogonal to the axial line of the duct 30, from the air cleaner connection portion 331 to the throttle body connection portion 341, the shape of the duct 30 gradually changes from a sideways elongated shape toward a circular shape. Due to this, it is possible to suppress influence of change of the shape of the duct 30 upon the air flow within that duct 30 to a minimum.

As seen in a cross section orthogonal to the axial line of the duct 30, the dimension or length w1 of the flow conduit within the air cleaner connection portion 331 in the left and right direction is greater than the diameter d1 of the flow conduit within the throttle body connection portion 341. Due to this, it is possible to reduce change of the cross sectional area of the flow conduit defined in the duct 30 between the air cleaner connection portion 331 and the throttle body connection portion 341.

Moreover, the length H3 of the frontward facing surface portion 311 in the up and down direction is smaller than the diameter D1 of the throttle body connection portion 341. Due to this, it is possible to reduce the dimension of the air cleaner box 31 in the up and down direction.

Yet further, this air cleaner box 31 has a shape whose dimension in the up and down direction reduces toward the front. The frontward facing surface portion 311 is positioned rearward of the front end portion 316 of the air cleaner box 31. As such, it is possible to make the space for connection of the duct 30 larger, as compared to the case when the duct 30 is connected to the front end portion 316.

While the present invention has been explained above in terms of an embodiment, this embodiment is not to be considered as being limitative of the present invention; various changes or omissions could be made.

The vehicle is not limited to being a scooter; it could be some other type of saddle-riding vehicle. A motor cycle, a vehicle for traveling on rough ground ("an all-terrain vehicle"), or a snowmobile is to be considered as being included in the term "saddle-riding vehicle". Moreover, a motor cycle is not limited to being a scooter; it could also be a sports type motor cycle or a moped. Yet further, the term "motor cycle" is not limited to referring to a two-wheeled vehicle; it could also be a three-wheeled vehicle.

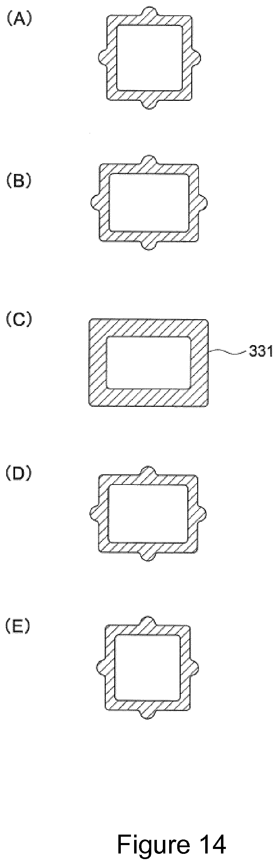

The shape of the duct is not limited to being the shape of the embodiment described above; it could be varied. For example the entire internal duct, or the entire external duct, could be shaped as being elongated sideways. As shown in Figure 14, the sideways elongated shape of the duct is not limited to being an elliptical shape. For example, it could also be a rectangular shape. Moreover, the internal duct and the external duct could also be separate members.

The shape of the air cleaner box is not limited to being the shape described in the above embodiment and it could be varied. For example, the frontward facing surface portion of the air cleaner box could also be the end portion of the air cleaner box. Alternatively, it would be acceptable for the duct to be connected to some portion of the air cleaner box other than a frontward facing surface portion thereof.

It would also be possible for the body cover not to be provided in the side where the air cleaner box is located. Moreover, the rear suspension could alternatively be disposed at some other position, i.e. not behind the air cleaner box. Some component other than the storage unit could also be disposed over the air cleaner box. For example, it would be acceptable for a fuel tank to be disposed over the air cleaner box. In this case, it would be possible to increase the volume of the fuel tank.

It will be appreciated that the term straddle-type vehicle or motor vehicle used herein, and as used in the art, is meant to include the following terms also used in the art:
saddle-ride type vehicle or motor vehicle, saddle-straddling type vehicle or motor vehicle, and includes: scooters, mopeds, motorcycles and motorbikes and may include motor tricycles, All Terrain Vehicles (ATVs), and snowmobiles.

## Claims

1. A vehicle (1), comprising:
a body frame (2);
a seat (5) supported upon the body frame (2);
a power unit (7) disposed under the seat (5), and pivotably supported upon the body frame (2); and
a storage unit (24) disposed under the seat (5);
wherein:
the power unit (7) includes:
an engine (26) including a cylinder head (261);
an intake passage (28) connected to the cylinder head (261);
a throttle body (29) connected to the intake passage (28);
a duct (30) connected to the throttle body (29); and
an air cleaner box (31) connected to the duct (30);
the duct (30) includes an internal duct (33) disposed within the air cleaner box (31);
the air cleaner box (31) is arranged so as to overlap the vehicle center line (C1) which extends in the front and back direction of the vehicle (1), as seen in a plan view; the intake passage (28) has a shape extending upward from the cylinder head (261) and then curved toward the rear; **characterised in that**:
the air cleaner box (31) includes a first air cleaner box portion (31a) and a second air cleaner box portion (31b) which are separate left and right members, with the first air cleaner box portion (31a) and the second air cleaner box portion (31b) being joined together; and
at least a portion of the internal duct (33) has a sideways elongated shape, having a dimension in the vertical or up and down direction shorter than a dimension in the transverse, sideways or left and right direction when viewed in a cross-section orthogonal to an axial line of the duct (30).

2. A vehicle (1) according to claim 1, wherein the sideways elongated shape is an elliptical shape whose dimension in the up and down direction is shorter than its dimension in the left and right direction when viewed in a cross section orthogonal to the axial line of the duct (30).

3. A vehicle (1) according to claims 1 or 2, wherein:
the internal duct (33) includes an air cleaner connection portion (331) connected to the air cleaner box (31); and
the air cleaner connection portion (331) has the sideways elongated shape.

4. A vehicle (1) according to claim 3, wherein:
the duct (30) includes an external duct (34) disposed externally to the air cleaner box (31);
the external duct (34) includes a throttle body connection portion (341) connected to the throttle body (29); and
the throttle body connection portion (341) has a shape that is circular or has a circularity that is higher than the sideways elongated shape when viewed in a cross section orthogonal to the axial line of the duct (30).

5. A vehicle (1) according to claim 4, wherein, from the air cleaner connection portion (331) toward the throttle body connection portion (341), the shape of the duct (30) gradually changes from the sideways elongated shape toward circular when viewed in a cross section orthogonal to the axial line of the duct (30).

6. A vehicle (1) according to claims 4 or 5, wherein, the dimension in the left and right direction of a flow conduit defined within the air cleaner connection portion (331) is greater than the diameter of a flow conduit defined within the throttle body connection portion (341) when viewed in a cross section orthogonal to the axial line of the duct (30).

7. A vehicle (1) according to claims 4 to 6, wherein:
the air cleaner box (31) includes a frontward facing surface portion (311) to which the duct (30) is connected; and
the dimension in the up and down direction of the frontward facing surface portion (311) is smaller than the diameter of the throttle body connection portion (341).

8. A vehicle (1) according to claim 7, wherein:
the air cleaner box (31) has a shape whose dimension in the up and down direction becomes smaller towards the front; and
the frontward facing surface portion (311) is positioned rearward of a front end portion (316) of the air cleaner box.

9. A vehicle (1) according to any preceding claim, wherein, in plan view, the portion of the internal duct (33) that overlaps the storage unit (24), fuel tank or other component has a sideways elongated shape.

10. A vehicle (1) according to any preceding claim, further comprising a body cover (3) that covers over at least a portion of the air cleaner box (31) from the side.

11. A vehicle (1) according to any preceding claim, further comprising a rear suspension (25) disposed rearward of the rear end portion of the air cleaner box (31).

12. A vehicle (1) according to any preceding claim, wherein the duct (30) and/or the air cleaner box (31) is made from resin.

## Patentansprüche

1. Fahrzeug (1), umfassend:
einen Karosserierahmen (2);
einen Sitz (5), der auf dem Karosserierahmen (2) gelagert ist;
eine Antriebseinheit (7), die unter dem Sitz (5) angeordnet ist und auf dem Karosserierahmen (2) schwenkbar gelagert ist; und
eine Aufbewahrungseinheit (24), die unter dem Sitz (5) angeordnet ist;
wobei:
die Antriebseinheit (7) Folgendes einschließt:
einen Motor (26), einschließlich eines Zylinderkopfs (261);
eine Saugleitung (28), die mit dem Zylinderkopf (261) verbunden ist;
eine Drosselklappe (29), die mit der Saugleitung (28) verbunden ist;
einen Kanal (30), der mit der Drosselklappe (29) verbunden ist; und
einen Luftfilterkasten (31), der mit dem Kanal (30) verbunden ist;
wobei der Kanal (30) einen inneren Kanal (33) einschließt, der im Luftfilterkasten (31) angeordnet ist;
der Luftfilterkasten (31) angeordnet ist, mit der Fahrzeugmittellinie (C1), die sich in die vordere und hintere Richtung des Fahrzeugs (1) erstreckt, zu überlappen, wie in der Draufsicht gezeigt;
die Saugleitung (28) eine Form aufweist, die sich vom Zylinderkopf (261) aus nach oben erstreckt und dann nach hinten krümmt;
**dadurch gekennzeichnet, dass**:
der Luftfilterkasten (31) einen ersten Luftfilterkastenabschnitt (31a) und einen zweiten Luftfilterkastenabschnitt (31b) einschließt, die ein getrenntes linkes und rechtes Element sind, wobei der erste Luftfilterkastenabschnitt (31a) und der zweite Luftfilterkastenabschnitt (31b) miteinander verbunden sind;
und
mindestens ein Abschnitt des inneren Kanals (33) eine seitwärts verlängerte Form aufweist, die bei Betrachtung in einem orthogonal zu einer Axiallinie des Kanals (30) liegenden Querschnitt in der Vertikal- oder der Aufwärts- und Abwärtsrichtung eine Abmessung aufweist, die kürzer ist als eine Abmessung in der Transversal-, Seitwärts- oder Links- und Rechtsrichtung.

2. Fahrzeug (1) nach Anspruch 1, wobei die seitwärts verlängerte Form eine elliptische Form ist, deren Abmessung in der Aufwärts- und Abwärtsrichtung bei Betrachtung in einem orthogonal zu einer Axiallinie des Kanals (30) liegenden Querschnitt kürzer ist als ihre Abmessung in der Links- und Rechtsrichtung.

3. Fahrzeug (1) nach Anspruch 1 oder 2, wobei:
der innere Kanal (33) einen Luftfilterverbindungsabschnitt (331), der mit dem Luftfilterkasten (31) verbunden ist, einschließt; und
der Luftfilterverbindungsabschnitt (331) die seitwärts verlängerte Form aufweist.

4. Fahrzeug (1) nach Anspruch 3, wobei:
der Kanal (30) einen äußeren Kanal (34), der außerhalb des Luftfilterkastens (31) angeordnet ist, einschließt;
der externe Kanal (34) einen Drosselklappenverbindungsabschnitt (341), der mit der Drosselklappe (29) verbunden ist, einschließt; und
der Drosselklappenverbindungsabschnitt (341) eine Form aufweist, die rund ist, oder eine Rundheit aufweist, die bei Betrachtung in einem orthogonal zur Axiallinie des Kanals (30) liegenden Querschnitt höher ist als die seitwärts verlängerte Form ist.

5. Fahrzeug (1) nach Anspruch 4, wobei sich, von dem Luftfilterverbindungsabschnitt (331) zum Drosselklappenabschnitt (341) hin, die Form des Kanals (30) bei Betrachtung in einem orthogonal zur Axiallinie des Kanals (30) liegenden Querschnitt schrittweise von der seitwärts verlängerten Form zu einer runden Form ändert.

6. Fahrzeug (1) nach den Ansprüchen 4 oder 5, wobei die Abmessung in der Links- und Rechtsrichtung eines Strömungskanals, der im Luftfilterverbindungsabschnitt (331) definiert ist, bei Betrachtung in einem orthogonal zur Axiallinie des Kanals (30) liegenden Querschnitt größer ist als der Durchmesser eines Strömungskanals, der im Drosselklappenverbindungsabschnitt (341) definiert ist.

7. Fahrzeug (1) nach den Ansprüchen 4 bis 6, wobei:
der Luftfilterkasten (31) einen nach vorne zeigenden Oberflächenabschnitt (311) einschließt, mit dem der Kanal (30) verbunden ist; und
die Abmessung in der Aufwärts- und Abwärtsrichtung des nach vorne zeigenden Oberflächenabschnitts (311) kleiner ist als der Durchmesser des Drosselklappenverbindungsabschnitts (341).

8. Fahrzeug (1) nach Anspruch 7, wobei:
der Luftfilterkasten (31) eine Form aufweist, deren Abmessung in der Aufwärts- und Abwärtsrichtung zur Vorderseite hin kleiner wird; und
der nach vorne zeigende Oberflächenabschnitt (311) hinter einem vorderen Endabschnitt (316) des Luftfilterkastens positioniert ist.

9. Fahrzeug (1) nach einem der vorhergehenden Ansprüche, wobei in der Draufsicht der Abschnitt des inneren Kanals (33), der die Aufbewahrungseinheit (24), den Kraftstofftank oder eine andere Komponente überlappt, eine seitwärts verlängerte Form aufweist.

10. Fahrzeug (1) nach einem der vorhergehenden Ansprüche, ferner umfassend eine Karosserieabdeckung (3), die mindestens einen Abschnitt des Luftfiltergehäuses (31) von der Seite abdeckt.

11. Fahrzeug (1) nach einem der vorhergehenden Ansprüche, ferner umfassend eine Hinterradaufhängung (25), die hinter dem hinteren Endabschnitt des Luftfilterkastens (31) angeordnet ist.

12. Fahrzeug (1) nach einem der vorhergehenden Ansprüche, wobei der Kanal (30) und/oder der Luftfilterkasten (31) aus Harz gefertigt sind.

## Revendications

1. Véhicule (1), comprenant :
un châssis (2) ;
un siège (5) supporté sur ledit châssis (2) ;
un bloc moteur (7) agencé sous le siège (5), et supporté pivotant sur le châssis (2) ; et
une unité de stockage (24) agencée sous le siège (5) ;
dans lequel :
le bloc moteur (7) comprend :
un moteur (26) comprenant une culasse de cylindre (261) ;
un passage d'admission (28) raccordé à la culasse de cylindre (261) ;
un organe de commande des gaz (29) raccordé au passage d'admission (28) ;
un conduit (30) raccordé à l'organe de commande des gaz (29) ; et
un boîtier de filtre à air (31) raccordé au conduit (30) ;
le conduit (30) comprend un conduit interne (33) agencé au sein du boîtier de filtre à air (31) ;
le boîtier de filtre à air (31) est agencé de manière à chevaucher la ligne médiane de véhicule (C1) qui s'étend dans la direction avant et la direction arrière du véhicule (1), en vue en plan ;
le passage d'admission (28) présente une forme s'étendant vers le haut à partir de la culasse de cylindre (261) et courbée ensuite en direction de l'arrière ;
**caractérisé en ce que** :
le boîtier de filtre à air (31) comprend une première partie boîtier de filtre à air (31a) et une deuxième partie boîtier de filtre à air (31b) qui sont des éléments gauche et droit séparés, la première partie boîtier de filtre à air (31a) et la deuxième partie boîtier de filtre à air (31b) étant réunies ; et
au moins une partie du conduit interne (33) présente une forme allongée latéralement, avec une dimension dans la direction verticale ou vers le haut et le bas plus courte qu'une dimension dans la direction transversale, latérale ou vers la gauche et la droite en vue en coupe transversale de manière orthogonale par rapport à une ligne axiale du conduit (30).

2. Véhicule (1) selon la revendication 1, dans lequel la forme allongée latéralement est une forme elliptique dont une dimension dans la direction vers le haut et le bas est plus courte que sa dimension dans la direction vers la gauche et la droite en vue en coupe transversale de manière orthogonale par rapport à la ligne axiale du conduit (30).

3. Véhicule (1) selon la revendication 1 ou 2, dans lequel :
le conduit interne (33) comprend une partie raccordement de filtre à air (331) raccordée au boîtier de filtre à air (31) ; et
la partie raccordement de filtre à air (331) présente la forme allongée latéralement.

4. Véhicule (1) selon la revendication 3, dans lequel :
le conduit (30) comprend un conduit externe (34) agencé de manière externe par rapport au boîtier de filtre à air (31) ;
le conduit externe (34) comprend une partie raccordement d'organe de commande des gaz (341) raccordée à l'organe de commande des gaz (29) ; et
la partie raccordement d'organe de commande des gaz (341) présente une forme qui est circulaire ou présente une circularité qui est supérieure à la forme allongée latéralement en vue en coupe transversale de manière orthogonale par rapport à la ligne axiale du conduit (30).

5. Véhicule (1) selon la revendication 4, dans lequel, à partir de la partie raccordement de filtre à air (331) et en direction de la partie raccordement d'organe de commande des gaz (341), la forme du conduit (30) se modifie progressivement en partant de la forme allongée latéralement pour devenir circulaire en vue en coupe transversale de manière orthogonale par rapport à la ligne axiale du conduit (30).

6. Véhicule (1) selon la revendication 4 ou 5, dans lequel la dimension dans la direction vers la gauche et la droite d'un conduit de circulation défini au sein de la partie raccordement de filtre à air (331) est supérieure au diamètre d'un conduit de circulation défini au sein de la partie raccordement d'organe de commande des gaz (341) en vue en coupe transversale de manière orthogonale par rapport à la ligne axiale du conduit (30).

7. Véhicule (1) selon les revendications 4 à 6, dans lequel :
le boîtier de filtre à air (31) comprend une partie surface regardant vers l'avant (311) à laquelle est raccordé le conduit (30) ; et
la dimension dans la direction vers le haut et vers le bas de la partie surface regardant vers l'avant (311) est inférieure au diamètre de la partie raccordement d'organe de commande des gaz (341).

8. Véhicule (1) selon la revendication 7, dans lequel :
le boîtier de filtre à air (31) présente une forme dont la dimension dans la direction vers le haut et vers le bas se réduit en direction de l'avant ; et
la partie surface regardant vers l'avant (311) est positionnée vers l'arrière d'une partie extrémité avant (316) du boîtier de filtre à air.

9. Véhicule (1) selon l'une quelconque des revendications précédentes, dans lequel, en vue en plan, la partie du conduit interne (33) qui chevauche l'unité de stockage (24), le réservoir de carburant, ou un autre composant, présente une forme allongée latéralement.

10. Véhicule (1) selon l'une quelconque des revendications précédentes, comprenant en outre un carénage (3) qui recouvre au moins une partie du boîtier de filtre à air (31) sur le côté.

11. Véhicule (1) selon l'une quelconque des revendications précédentes, comprenant en outre une suspension arrière (25) agencée vers l'arrière de la partie extrémité arrière du boîtier de filtre à air (31).

12. Véhicule (1) selon l'une quelconque des revendications précédentes, dans lequel le conduit (30) et/ou le boîtier de filtre à air (31) est réalisé à partir de résine.
